# EUROPEAN PATENT APPLICATION

(11) **EP 2 535 620 A1**
(43) Date of publication of application: **19.12.2012**
(21) Application number: 12172021.3
(22) Date of filing: 14.06.2012
(51) Int. Cl.: F16J 15/34

(54) **Integrated end face seal removal apparatus**

(30) Priority: 17.06.2011 US 201113162747
(71) Applicant: Hamilton Sundstrand Corporation, Windsor Locks, CT 06096-1010 (US)
(72) Inventor: Blewett, Michael R., Stillman Valley, IL Illinois 61084 (US); Brekhus, Roger D., Rockford, IL Illinois 61114 (US)
(74) Representative: Leckey, David Herbert

(57) **Abstract**

A mechanical seal (100) includes a seal cartridge (101) and a removal formation (105). The seal cartridge (101) includes an outer cylindrical surface (162), an inner cylindrical surface (160) concentric to the outer cylindrical surface (162), and a ring surface (163) connecting the outer cylindrical surface (162) and the inner cylindrical surface (160) to define an inner cavity (111) interior to the seal cartridge (101). The removal formation (105) is arranged on the ring surface (163), and includes a first surface (164) proximate the ring surface (163), an indentation feature (151) proximate the first surface (163), and a seal puller feature (152) proximate the indentation feature (151) defining a channel configured to allow application of removal forces to the seal cartridge (101).

## Description

### BACKGROUND OF THE INVENTION

This disclosure relates to mechanical seals and, more specifically, to an integrated end face seal removal apparatus.

End face mechanical seals used in engine gearbox applications require removal if maintenance operations have identified leakage or other issues. Such seals can be difficult to remove and, in some cases, can require special tools for removal.

### BRIEF DESCRIPTION OF THE INVENTION

According to an example embodiment of the present invention, a mechanical seal includes a seal cartridge and a removal formation. The seal cartridge includes an outer cylindrical surface, an inner cylindrical surface concentric to the outer cylindrical surface, and a ring surface connecting the outer cylindrical surface and the inner cylindrical surface to define an inner cavity interior to the seal cartridge. The removal formation is arranged on the ring surface, and includes a first surface proximate the ring surface, an indentation feature proximate the first surface, and a seal puller feature proximate the indentation feature defining a channel configured to allow application of removal forces to the seal cartridge.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a perspective cutaway view of an end face mechanical seal with an integrated seal removal formation, according to an example embodiment;
FIG. 2 illustrates a perspective view of an end face mechanical seal with an integrated seal removal formation, according to an example embodiment; and
FIG. 3 illustrates a perspective view of an end face mechanical seal with a plurality of integrated seal removal formations, according to an example embodiment.

### DETAILED DESCRIPTION OF THE INVENTION

As described in detail herein, example embodiments of the present invention provide end face mechanical seals with integrated pulling features configured to enable repetitive installation and removal without interfering with operation of the seals. According to example embodiments, end face mechanical seals may include one or more removal formations attached thereon. The one or more removal formations may be a generally continuous formation of metal shaped to allow gripping of the removal formation by a user or standard hand tool. Therefore, example embodiments provide end face mechanical seals which require no special tools or equipment for routine maintenance and removal.

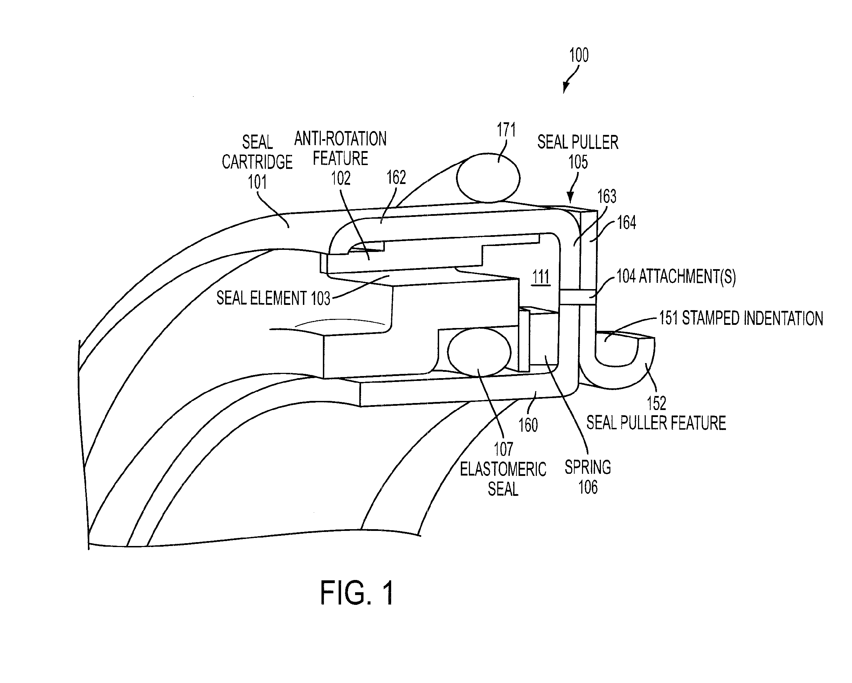

FIG. 1 illustrates a perspective cutaway view of an end face mechanical seal with an integrated seal removal formation, according to an example embodiment of the present invention. As illustrated, the seal 100 includes a mechanical seal cartridge 101. The cartridge 101 may have inner and outer walls 160, 162 connected by ring surface 163. The ring surface 163 is planar in one embodiment. An inner portion 111 of the seal cartridge 101 is defined by the ring surface 163 and the inner and outer walls 160, 162. The cartridge 101 can have a substantially annular shape and may be at least partially surrounded by elastomeric seal 171. Elastomeric seal 171 may be configured to interface with a gearbox case during seal installation. The inner portion 111 may be configured to house and support a plurality of mechanical seal portions. For example, the plurality of mechanical seal portions may include any suitable seal portions, including those conventionally employed.

According to FIG. 1, the plurality of mechanical seal portions includes anti-rotation feature 102 configured to maintain relative alignment and proper face-rotation of main seal element 103 relative to the seal cartridge 101. The anti-rotation feature 102 contacts both an outer wall 160 of the seal cartridge 101 and the main seal element 103 in one embodiment. The main seal element 103 may be a carbon seal element or any suitable seal element according to any desired implementation. The plurality of mechanical seal portions may further include spring 106. The spring 106 may be a spring configured to maintain appropriate pressure between the main seal element 103 and an opposing sealing element (not illustrated for clarity) while installed. The plurality of mechanical seal elements may further include elastomeric seal 107. The elastomeric seal 107 may be configured to deform thereby enabling proper sealing of the inner portion 111 of the cartridge 101 housing the plurality of mechanical seal portions.

The seal 100 also includes seal puller / removal formation 105 arranged on an exterior portion of the seal cartridge 101. The seal puller / removal formation 105 may be formed of a stamped piece of material, or a machined piece of material, forming a shape defined by an indentation 151 and seal puller feature 152. The shape may include a first surface 164 proximate the seal cartridge 101. The indentation 151 can be formed proximate the first surface 164, and the seal puller feature 152 can be formed proximate the indentation 151. The combination of indentation 151 and seal puller feature 152 defines a channel to allow removal of the entire seal 100 from an installed position without the use of special tooling. The indentation 151 may be formed in any appropriate manner, including metal stamping, bending, rolling, machining, or other suitable manner or combination of manners whereby the seal puller feature 152 is also formed. In one embodiment, one or both of the first surface 164 and the seal puller feature 152 are planar or substantially planar. It should be understood that although illustrated as a single indentation, the same may be varied in many ways without departing from the scope of example embodiments. For example, multiple indentations and/or variations may be included to form other shapes for the seal puller / removal formation 105.

The seal puller / removal formation 105 may be attached to the seal cartridge 101 through at least one attachment 104. The at least one attachment 104 may be a welded portion between the seal cartridge 101 and a first surface 164 of the seal puller 105. The welded portion may be a spot weld, tack weld, or other attachment means enabling relatively simple attachment of the seal puller / removal formation 105 to the seal cartridge 101 in such a manner as to provide sturdy attachment. Sturdy attachment should be understood as any attachment by which the application of removal or greater than removal force to the seal puller / removal formation 105 does not result in detachment of it from the seal cartridge 101.

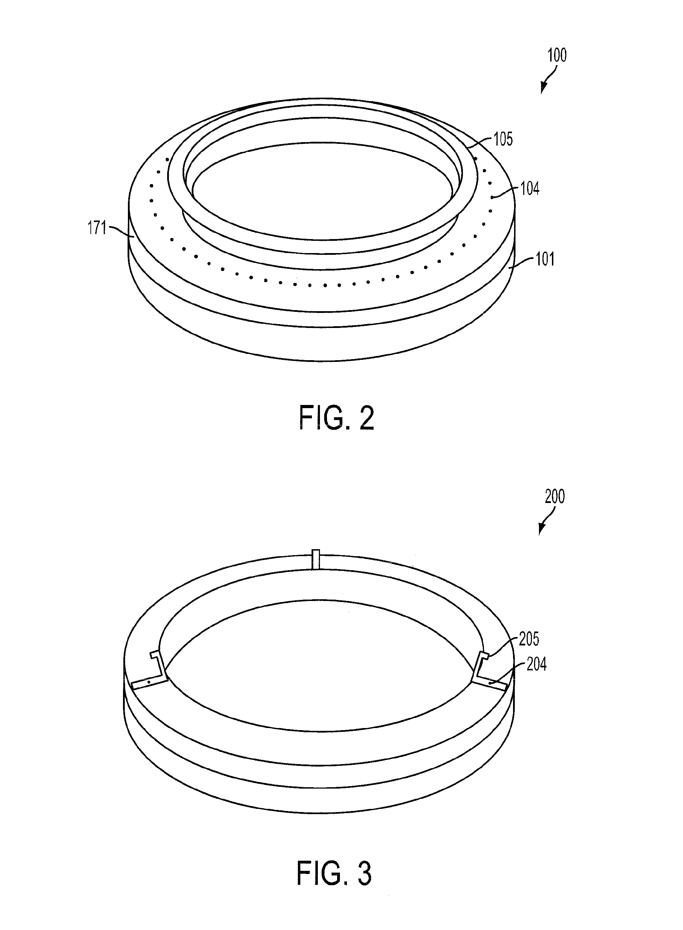

The seal puller / removal formation 105 may be embodied as an annular ring formed in proportion with the seal cartridge 101, and attached thereto. FIG. 2 illustrates a perspective view of the end face mechanical seal 100 with an integrated seal removal formation 105. As illustrated, the seal removal formation 105 is formed as an annular ring attached to the seal cartridge 101 through a plurality of attachments 104.

Alternatively, the seal puller / removal 105 formation may be embodied as a plurality of metal portions attached to the seal cartridge 101. For example, FIG. 3 illustrates a perspective view of an alternative embodiment of an end face mechanical seal 200 with a plurality of integrated seal removal formations. As shown, the seal 200 includes a plurality of seal removal formations 205 attached to the seal cartridge 201 through attachments 204. In one embodiment, the plurality of seal removal formations 205 may be spaced substantially equidistant relative to one another to facilitate easier gripping and balance.

Therefore, as described above, example embodiments of the present invention provide mechanical seals with integrated removal formations. A mechanical seal may include a seal cartridge and a removal formation welded thereon. The seal cartridge includes an outer cylindrical surface, an inner cylindrical surface concentric to the outer cylindrical surface, and a planar ring surface proximate both the outer cylindrical surface and the inner cylindrical surface defining an inner cavity interior to the seal cartridge. The removal formation is arranged on the planar ring surface, and includes a first planar surface proximate the planar ring surface, an indentation feature proximate the first planar surface, and a second planar surface proximate the indentation feature defining a channel configured to allow application of removal forces to the seal cartridge.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A mechanical seal (100), comprising:
a seal cartridge (101;201), wherein the seal cartridge (101) includes an outer cylindrical surface (162), an inner cylindrical surface (160) concentric to the outer cylindrical surface, and a ring surface (163) connecting the outer cylindrical surface and the inner cylindrical surface to define an inner cavity (111) interior to the seal cartridge (101); and
a removal formation (105;205) arranged on the ring surface (163), wherein the removal formation (105;205) includes a first surface (164) proximate the ring surface (163), an indentation feature (151) proximate the first surface (164), and a seal puller feature (152) proximate the indentation feature (151) defining a channel configured to allow application of removal forces to the seal cartridge (101).

2. The mechanical seal of claim 1, further comprising:
a primary sealing element (103), for example formed of carbon, arranged within the inner cavity (111) configured to form a seal against a sealing surface external to the inner cavity (111).

3. The mechanical seal of claim 2, further comprising:
a spring element (106) arranged proximate the first surface (164) and in mechanical communication with the primary sealing element (103) configured to exert a spring force against the primary sealing element (103).

4. The mechanical seal of claim 3, further comprising:
a secondary sealing element (107), for example an elastomeric sealing element, arranged proximate the primary sealing element (103) and the spring element (106) configured to form a secondary seal within the inner cavity (111).

5. The mechanical seal of any of claims 2 to 4, further comprising:
an anti-rotation feature (102) arranged in mechanical communication with the outer cylindrical surface (162) and the primary sealing element (103) configured to prevent rotation of the primary sealing element (103) relative to the seal cartridge (101).

6. The mechanical seal of any preceding claim, wherein the first surface (164) is fixedly attached to the ring surface (163) through a welded portion (104) of the first surface (164) and the ring surface (163).

7. The mechanical seal of claim 6, wherein the welded portion (104) is a spot weld or a tack weld.

8. The mechanical seal of any preceding claim, wherein the first surface (164) is substantially circular.

9. The mechanical seal of any of claims 1 to 7, further comprising:
second aid third removal formations (20G) arranged on the ring surface (163), wherein each of the second and third removal formations (205) include a first surface proximate the ring surface (163), an indentation feature proximate the first surface, and a seal puller feature proximate the indentation feature defining a channel configured to allow application of removal forces to the seal cartridge (201).

10. The mechanical seal of any of claims 1 to 7, further comprising:
an additional removal formation (205) arranged on the ring surface (163) including a first surface proximate the ring surface (163), an indentation feature proximate the first surface (164), and a seal puller feature proximate the indentation feature defining a channel configured to allow application of removal forces to the seal cartridge (201).

11. The mechanical seal of claim 9 or 10, wherein the removal formations (205) are spaced equidistant between one another on the ring surface (163).

12. The mechanical seal of any preceding claim, wherein the first surface (164) of the removal formation (105) is of substantially same dimensions as the ring surface (163) proximate thereto.

13. The mechanical seal of any preceding claim, wherein the indentation feature (151) is a stamped indentation feature.

14. The mechanical seal of any of claims 1 to 12, wherein the indentation feature is a machined indentation feature.

15. The mechanical seal of any preceding claim wherein the ring surface (163) and/or the first surface (164) are planar.
